(19) **Europäisches Patentamt**

**European Patent Office**

**Office européen des brevets**

(11) **EP 1 092 213 B1**

(12) ## EUROPEAN PATENT SPECIFICATION

(45) Date of publication and mention
of the grant of the patent:
**10.09.2003 Bulletin 2003/37**

(21) Application number: **99928320.3**

(22) Date of filing: **02.06.1999**

(51) Int Cl.$^7$: **G09B 19/18**, A63F 3/00

(86) International application number:
**PCT/SE99/00959**

(87) International publication number:
**WO 99/063503 (09.12.1999 Gazette 1999/49)**

(54) **A SYSTEM FOR SIMULATING A BUSINESS PROCESS**

SYSTEM ZUR SIMULATION EINES GESCHÄFTSPROZESSES

SYSTEME POUR SIMULER LE PROCESSUS D'UNE TRANSACTION COMMERCIALE

(84) Designated Contracting States:
**DE FR GB IE IT SE**

(30) Priority: **02.06.1998 SE 9801964**

(43) Date of publication of application:
**18.04.2001 Bulletin 2001/16**

(73) Proprietor: **Celemiab Systems AB**
**201 25 Malmö (SE)**

(72) Inventor: **MELLANDER, Klas**
**S-211 38 Malmö (SE)**

(74) Representative: **Akerman, Marten Lennart**
**Albihns Malmö AB**
**Box 4289**
**203 14 Malmö (SE)**

(56) References cited:
**US-A- 5 056 792      US-A- 5 737 581**

## Description

This invention relates to a system for simulating a business process.

Background

Though well described in economy literature, it is common that the basic principles of a business process is poorly understood by members of company organisations. It has been found that an increased understanding of the economic mechanisms in an organisation may have a great impact on the degree of the overall success. Therefore, pedagogical aids have been developed to illustrate the consequences of decisions made under different conditions.

Prior Art

An example of prior art in this field is described in US Patent No. 5, 056,792 to Helweg-Larsen and Cousins. This patent describes a business education model comprising tokens to indicate values of resources such as raw material, cash or debts (negative resource), a board having separate areas for representing different entities such as plants or specific purpose locations, and cards indicating specifications for the aforementioned entities. The model is used as a means to set up different business situations and to observe the consequences of decisions in monetary terms. This prior art, however, suffer inter alia from the drawback that once having stepped through a model with established resource parameters it is hard to change the conditions in order to observe the consequences of other conditions or choices.

Another example of prior art, however not belonging to pedagogical tools, is described in US Patent no. 5,737,581 to Keane. This patent shows a process for simulating on a computer system the implementation of a quality system on a business having a product flow. The simulation system enables quality audits being performed on the business. The system is provided with a parameter input, a parameter processing mechanism and an effect showing output. This prior art, however, lacks means for presenting status, changes and effects in a visible model. Hence, the pedagogical objective cannot be achieved by this system.

Object of the Invention/Problem to be Solved

The general object of the present invention, and the problem to be solved, is to provide a system for simulating and demonstrating a business process which system is flexible and allows for a simple change of conditions and input parameters. An aspect of the problem is to provide a system for simulating a business process in which values of different kinds can be easily compared. Another aspect of the problem is to provide a system for simulating a business process in which the values of a selected number of parameters can be controlled and the consequences of a combination of parameter values calculated and demonstrated dependent on predetermined rules. A still further aspect of the problem is to interpret and translate or compile first parameters expressed in terms of a first frame of references to a second frame of references appropriate for the simulation of the business process.

Summary of the Invention

The object of the invention is achieved in accordance with the invention by providing a system for simulating a business process according to claim 1, a parameter processing device according to claim 10 and a computer program product according to claim 13. The system comprises a business process model in combination with a parameter processing device, by means of which device parameter values and different statuses of the model are calculated and manipulated. The model is adapted for setting up and illustrating business conditions and changes in the conditions through a number of selected parameters. The parameter processing device is in its turn adapted to calculate a new status dependent on input parameter values, to indicate the new status and to generate action parameters indicating proposed actions for updating the model. The model is thus operatively linked to the parameter processing device and together they form a feedback control loop constituting a system for simulating and demonstrating a business process dependent on soft value parameters as well as technical or monetary parameters, here called hard value parameters. Typically, the user of the simulating system also proposes and inputs parameter values as well as executes the updating of the model and thus takes an active part in the simulation. Thereby, an improved pedagogical effect is achieved as a consequence of the technical effects of the means for simulation.

Description of the Drawings

The invention will now be further explained by means of embodiments in conjunction with the accompanying drawings, wherein:

Fig 1A and 1B shows an overview of a model in accordance with an embodiment of the invention;
Fig 2 shows an embodiment of an updating card;
Fig 3 shows an embodiment of event cards;
Fig 4 shows embodiments of action cards;
Fig 5 shows an embodiment of the inventive system in interaction with human users:
Fig 6 shows a block diagram of an embodiment of a status description generator 600:
Fig 7A and 7B show embodiments of a parameter input interface comprised in a status description generator;
Fig 8 shows a parameter output interface comprised in a status description generator:
Fig 9 shows a flow diagram for an embodiment of a status description generator;
Fig 10A,10B,11A,11B show examples of means for processing complex inter-dependencies between parameters;
Fig 12A and 12C show schematically exemplifying embodiments of a parameter processing device;
Fig 12B shows means to simulate and present effects of relative changes in input control parameters on output key parameters of a business process.

Detailed Description of a Preferred Embodiment

The System

The system according to the invention comprises a model for illustrating business conditions and a parameter processing device for processing parameters given in the model. The parameter processing device operates in interaction with the model and the user of the system. With the parameter processing device, parameters can be easily adjusted in order to simulate the business consequences of alternative actions and illustrated by means of the model. The parts of the system will be described below.

The Model

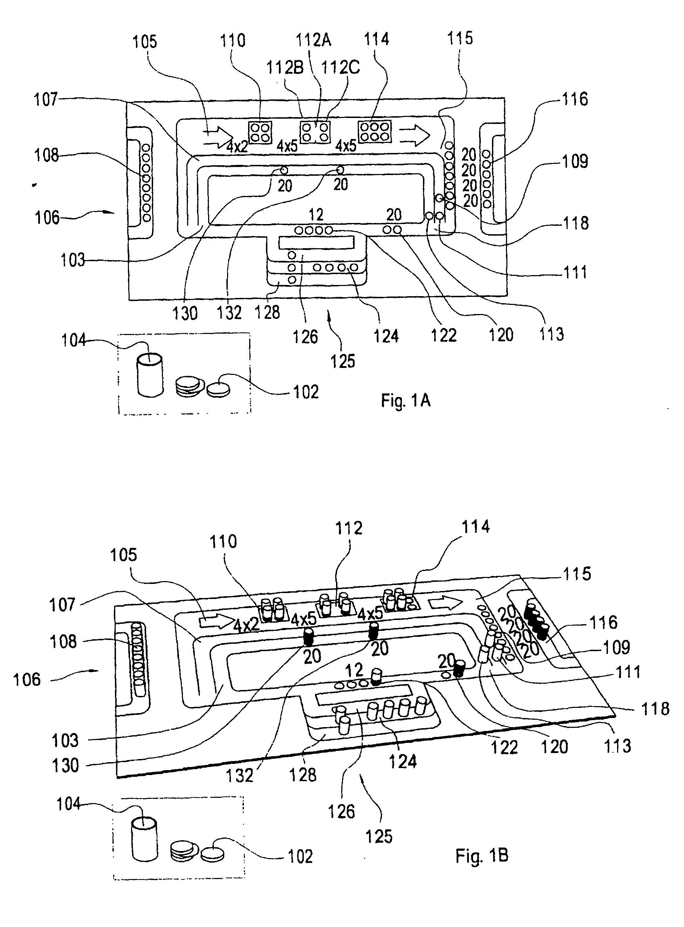

Fig 1 shows an embodiment of a business process model for illustrating business conditions. The model comprises tokens or markers 102 for indicating a value of different business parameters, e.g. money, goods or labour. These tokens are also called value markers and each token may for example be assigned a value equalling 1 million (M) in any monetary unit. A value carrier 104 is provided to gather an assembly of value markers. The function of this model is to express values of different kind in the same parameter unit, and hence, values of different kinds can be easily compared.

The model further comprises a board or a map 106 illustrating a business process plan. The board comprises areas representing parameters defining the current simulated business, in this embodiment areas representing interested parties of a business, areas representing activities of said business, areas representing different assets of said business and areas for marking the value of said resources, activities and assets. More specifically, the shown exemplifying embodiment of the board comprises:

- a suppliers area 108 for storing an indication of the value of materials and components being deliverable by suppliers;
- a production process area 105 taking as an input a value of materials and components delivered by suppliers and giving as an output the cost of goods sold to customers.

The production process area is provided with:

- a stock of materials and components area 110 for storing an indication of the value of materials and components to be used in the production;
- a work in progress area 112 used to indicate the value of ongoing production, the work in progress area, having sub-areas for manufacturing and assembly, respectively;
- a stock of finished goods area 114 for storing an indication of the value of a stock of finished goods not yet being sold or delivered;
- a cost of goods sold area 115 for storing an indication of the value of goods sold.

The board further comprises a customers money area 116 for storing an indication of the value of products sold and invoiced to a customer, the customers money area having an input part for the value of delivery and payment, respectively, of sold goods.

A sales, administration and R&D (Research & Development) area 107 comprised in the board 106 is provided for simulating the flow of values related to the recited entities and having an input part for said values. Said sales, administration and R&D area 107 is provided with:

- a development costs area 109 for storing an indication of the value of development costs spent in the simulation of a business process; and
- an overhead costs area 111 for storing an indication of the value of overhead costs spent in the simulation of said business process.

An investments area 103 comprised in the board is provided for simulating the flow of values related to investments. The investments area 103 comprises:

- a property value area 130 for storing an indication of the value of properties;
- a plant and equipment area 132 for storing an indication of the value of plants and equipment, e.g. computers, tools, vehicles; and
- a depreciation area 113 for storing an indication of the depreciation value of the entities related to investments.

The production area 105, the sales, administration and R&D area 107 and the investments area 103 have a common output area 118 that passes an accounts receivable area 120 for storing an indication of the value of invoices that have not yet been paid. The value of the foregoing is input into an interested party assets area 125, where assets belonging to each interested party are summed up. In this embodiment, the interested party asset area 125 comprises:

- a cash and equivalents area 122 for storing an indication of the value of liquid assets of the company running the simulated business;
- a lender assets area 124 for storing an indication of the value of interest and liabilities;
- an owner assets area 126 having a dividends area for storing an indication of the value of dividends and an equity area for storing an indication of the difference between the value of total assets and liabilities; and
- a community assets area 128 having a taxes area for indicating the value of taxes to the community in exchange for services supplied by said community.

In Fig 1A, an overview of the board is shown with indications of the functional areas as well as indications of value storage areas for storing value markers or value carriers. In Fig 1B, the current financial situation of the simulated company is shown by means of value carriers filled with different numbers of value markers stored in the different value storage areas. The numbers in bold symbols indicate the value unit for each storage area in the current example.

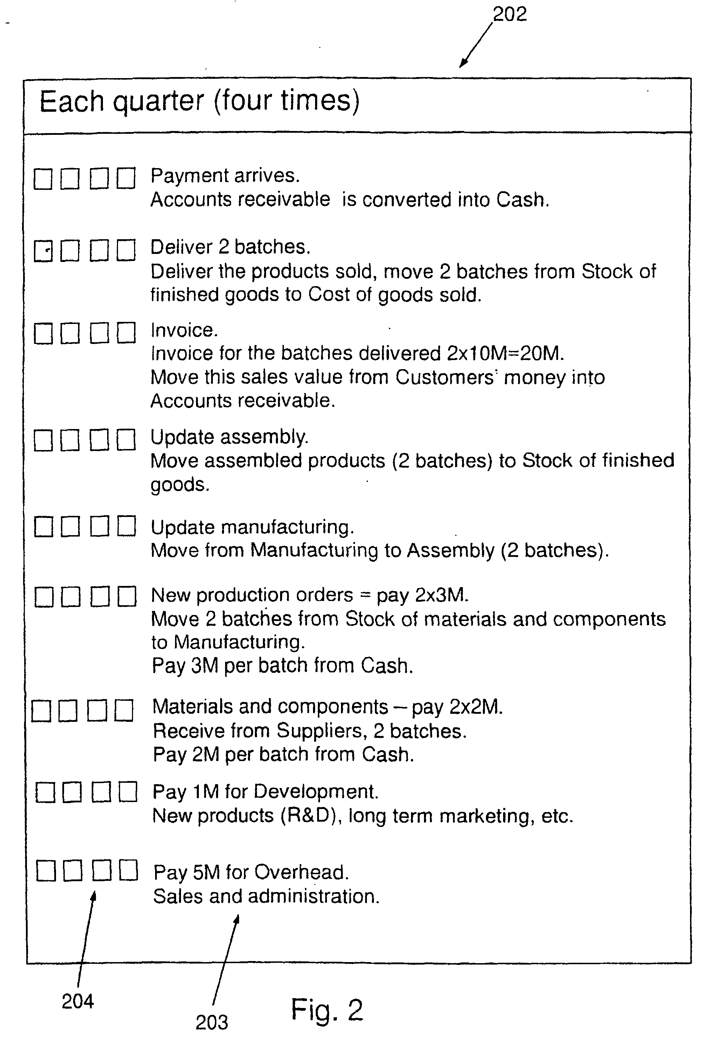

In one embodiment, this model is implemented by means of board made of e.g. paper, where the different functional areas are marked with different colours and text in order to enhance the intelligibility of the model. The value markers may be embodied in coin shaped tokens e.g. made of plastic and the value carriers may be cylinders suitable for collecting the tokens and preferably made in transparent plastic. In another embodiment, the model may be implemented digitally or electronically by means oc a digital data processing system, e.g. a general personal computer set together with software designed in accordance with the invention, such that a displayable picture of the board and its functional field is generated together with symbols constituting the value markers and the value carriers. The value markers and the value carriers are in this case movable for example by a per se known drag-and-drop function. The model further comprises a number of cards giving parameters or action plans for the simulation. Fig 2 shows an embodiment of an updating card 202 having a checklist with a number of steps 203 for updating the parameters of the model. In this example, the intention is to update the model four times during one simulated business year. To keep track of the updates, the updating card 202 is therefore provided with checkboxes 204, one checkbox for each quarter. This exemplifying embodiment comprises the following updating steps explained also with reference to Fig 1A and 1B:

- Payment arrives. Accounts receivables are converted into cash, whereupon value markers currently stored at the Accounts receivable area 120 are moved to Cash area 122.
- Deliver 2 batches. Deliver the products sold, move two batches, in the form of value markers in two value carriers, from Stock of finished goods area 114 to Cost of goods sold area 115.
- Invoice. Invoice for the batches delivered: 2x10M=20M. Whereupon the corresponding value markers for this sales are moved from Customers' money area 116 to Accounts Receivable area 120.
- Update assembly. Whereupon the value markers representing the value of the assembled products (2 batches=2 value carriers) from the Assembly sub-area of Work in progress area 112 to Stock of finished goods area .
- Update manufacturing. Whereupon, the value markers ((2 batches=2 value carriers) representing the value of the manufactured goods are moved from the Manufacturing sub-area to the Assembly sub-area of the Work in progress area 112.

- New production orders - pay 2x3M. Whereupon, 2 batches, i.e. 2 value carriers containing value markers representing the value of materials and components needed to execute the order, are moved from Stock of materials and components area 110 to Manufacturing sub-area of Work in progress area 112; and whereupon 3M per batch are paid from Cash by moving value markers representing 3M from Cash area 122.
- Materials and components - pay 2x2M. Receive from Suppliers, 2 batches, by moving value markers representing 2x2 M from Suppliers area 108 to Stock of materials and components area 110. Pay 2M per batch from Cash, by moving the corresponding number of value markers from Cash area 122 to Suppliers area 120.
- Pay 1M for Development, new products (R&D), long-term marketing., etc. by moving the corresponding number of value markers from Cash area 122 to Development cost area 109.
- Pay 5M for Overhead, e.g. sales and administration by moving the corresponding number of value markers from Cash area 122 to Overhead costs area 111.

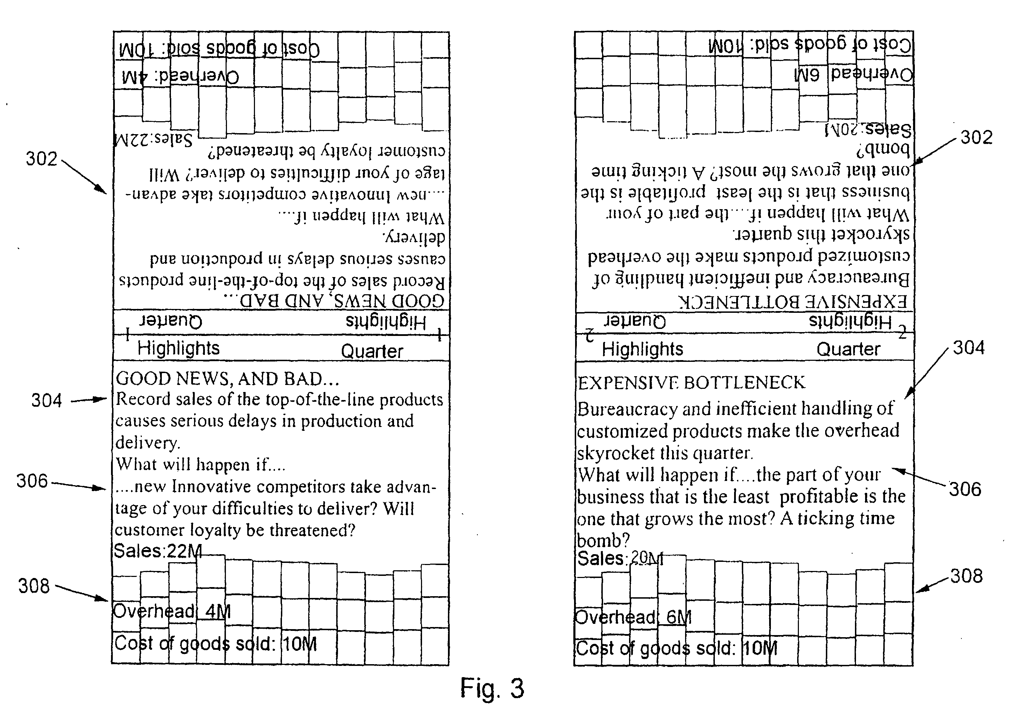

The model is also provided with pre-arranged event cards 302 as shown in Fig 3. Each event card is provided with:

- business parameters 304 in the shape of executive information such as: large sales leads to delivery problems; bureaucracy leads to large overhead costs; and
- possible event parameters 306 such as: competitors possible actions; or growth in certain parts of the business;
- value parameters 308 such as:value of sales revenues; value of overhead costs; value of goods sold.

The purpose of the event cards is to provide a current simulation status with new parameters, and specifically with parameters that require human interaction with the model.

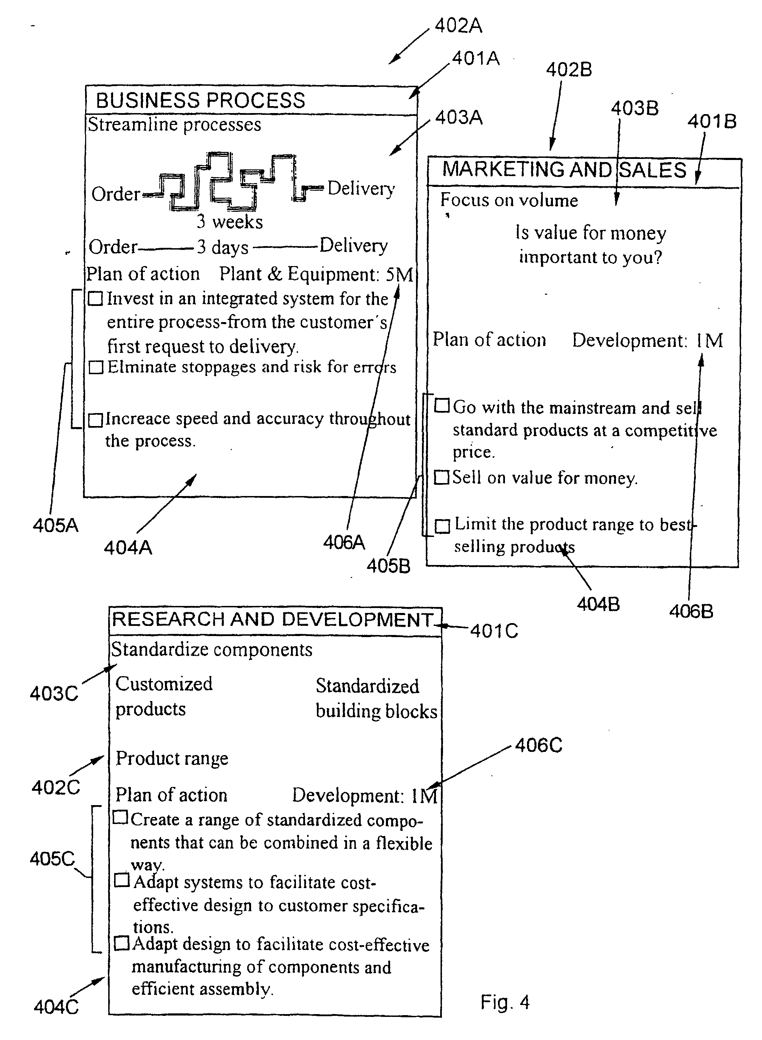

In order to vary the simulations, in accordance with the specific properties of people interacting with the model, a number of plan-of-action cards 402A,402B,402C, as shown in Fig 4, are provided in the model. Each plan-of-action card is provided with an action parameter 403A,403B403C and a plan of action 404A,404B,404C in different action parameter categories 401A,401B,401C taken from a particular point of view, e.g. business processes, marketing and sales, or research and development. Each plan of action comprises a number of action parameter steps 405A,405B, 405C to be taken in the simulation The plan-of-action card is also provided with a value parameter indication 406A, 406B,406C, which indicates the cost for carrying out the selected actions. In one embodiment nine such plan-of-action cards are provided, and the interacting people are supposed to select e.g. 3 of these plan of action cards in order to assemble a certain combination of actions and performing the action steps by changing the parameters of the model. Examples of action parameters within the exemplified action parameter categories are:

Business processes (action parameter category 401A)
    Streamline processes (action parameter 403A)
        Plan of action 404A-
        Invest in an integrated system for the entire process from the customer's first request to delivery (action parameter step 405A);
        Eliminate stoppages and risks for error (action parameter step 405A);
        Increase speed and accuracy throughout the process (action parameter step 405A).
    Value parameter indication = 5M (406A).
Marketing and Sales (action parameter category 401B)
    Focus on volume (action parameter 403B)
        Plan of action 404B-
        Go with the mainstream and sell standard products at a competitive price (action parameter step 405B);
        Sell on value for money (action parameter step 405B);
        Limit the product range to best selling products (action parameter step 405B).
    Value parameter indication = 1M (406B).
Research and Development (action parameter category 401C).
    Standardise components (action parameter 403C)
        Plan of action 404C-
        Create a range of standardised components that can be combined in a flexible way (action parameter step 405C);
        Adapt systems to facilitate cost-effective design to customer specifications (action parameter step 405C);
        Adapt design to facilitate cost-effective manufacturing of components and efficient assembly (action parameter step 405A).

Value parameter indication = 1M (406C).

The mentioned updating cards, the event cards and the plan-of-action cards is in one embodiment implemented on paper. but may in other embodiments be implemented e.g. digitally by means of a specifically designed software program and a computer system.

Parameter processing device

The parameter processing device is especially devised to interact with the model and the people running a business simulation. To this end, the device is provided with a number of functions having human/machine interfaces set up to receive input parameter values as input and deliver consequence descriptions or output parameter values as output.

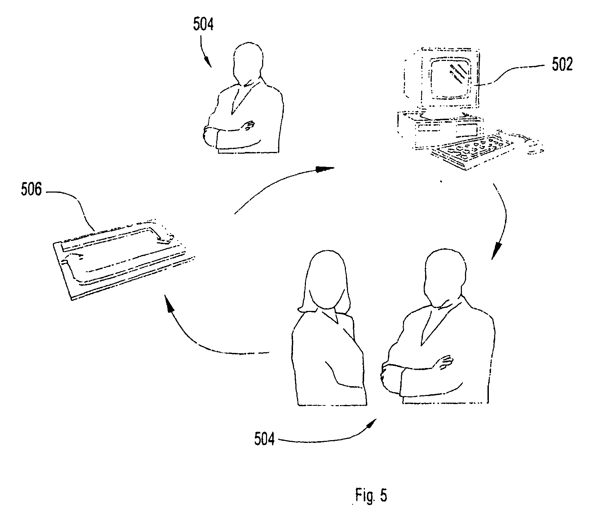

An embodiment of the inventive system is shown in Fig 5. A parameter processing device 502 realised by means of a standard computer set, set up with a specific program comprising means in accordance with the inventive concept is shown in interaction with human users 504 and a schematically shown model 506. The computer set comprises per se known data processor, storage medium, data presentation device, and data I/O-devices. Simulation parameters are processed by means of the parameter processing device 502 and the status of a simulated business is illustrated by means of the model. Input and output parameters to and from the model and the parameter processing device are handled by the interacting human users 504. The parameter processing device is provided with a number of parameter input and output interfaces as well as different parameter processing device units for different simulation parameters.

Status parameter processing:

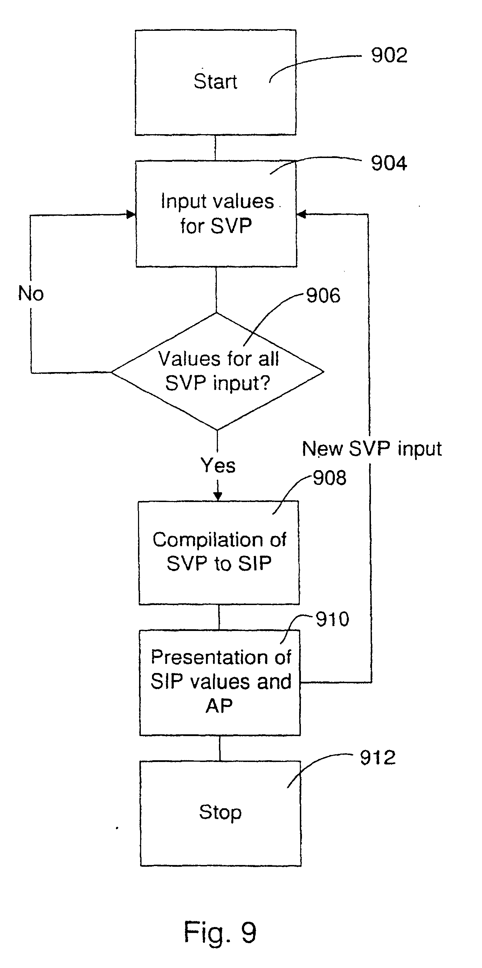

An embodiment of the parameter processing device is provided with means for generating a description of the status of a company or business, i.e. company status parameters. In general, the status of a company can be described in what can be called soft value terms or by means of soft value parameters. In this text, soft value terms is understood to mean a description of company status parameters expressed in perhaps more or less vague human language. A function of the means for generating a description of the status of a company is to compile the soft value parameters into a more to the point description of a company status. Examples of soft value parameters is strength of company image, product quality, degree of resource utilisation or efficiency. In accordance with the invention a number of such soft values can be compiled into a description using e.g. two parameters such as customer value and cost efficiency, which is further described below in connection with Fig 8.

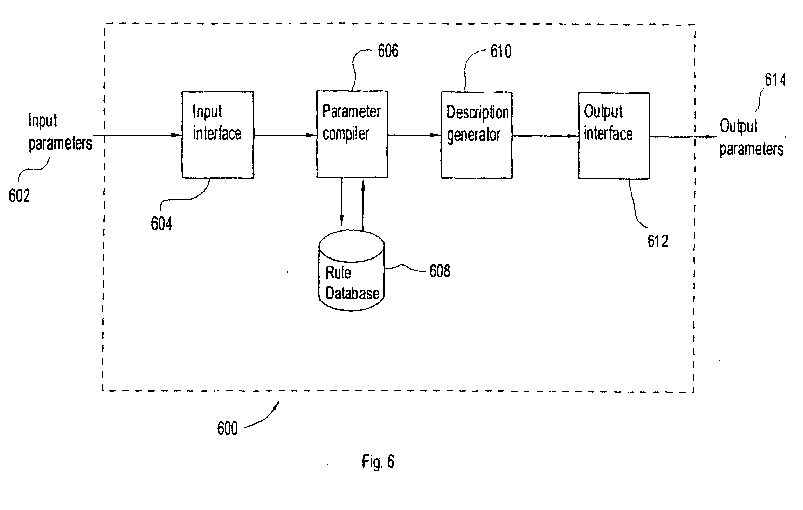

Fig 6 shows a block diagram of an embodiment of a status description generator 600, comprising an input interface 604 for receiving input soft value parameters 602. The input interface 604 is coupled to a parameter compiler 606 which in its turn is communicatively coupled to a rule database 608. The rule database 608 is devised to store predetermined rules for interpreting and compiling input parameter values and combinations of input parameter values into another parameter description, here called status interpretation parameters. The rule database is in one embodiment further devised to store predetermined action parameters suggested to put into the simulation dependent on the current status. The compiled parameters and, where appropriate, the action parameters are passed on to means for generating a company characteristics description. These means are also called description generator 610 devised to generate a description of the parameters that is conceivable by human inter-actors. The description of output parameters 614 is then presented by means of an output interface 612. In the embodiment of the inventive system as shown in Fig 6, the input and output interfaces preferably make use of the screen of the standard computer set.

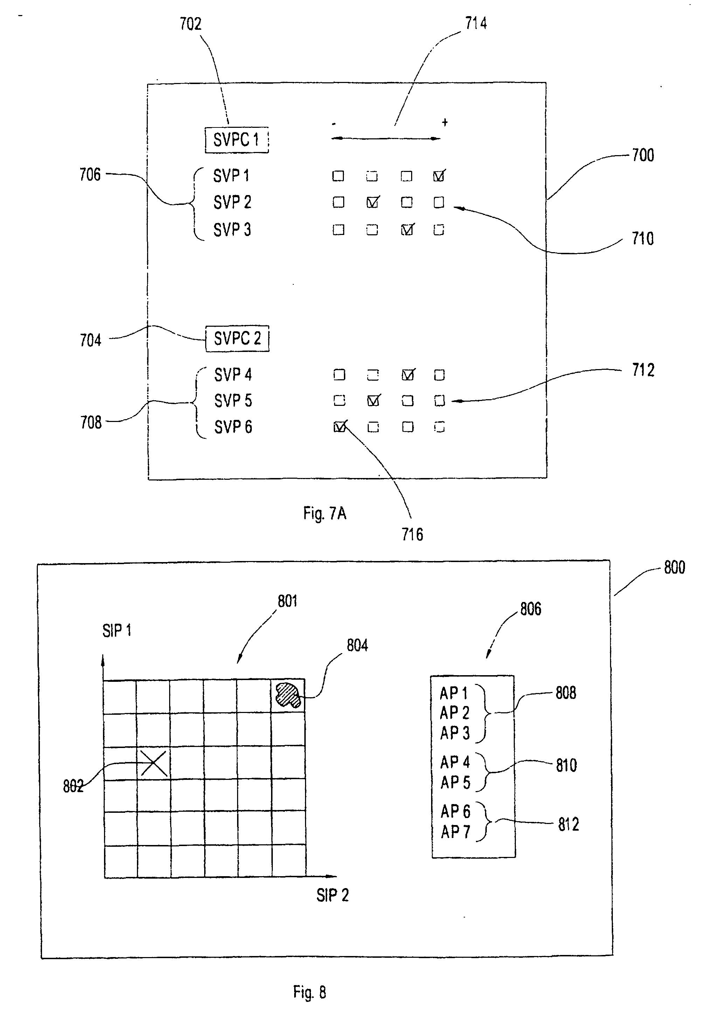

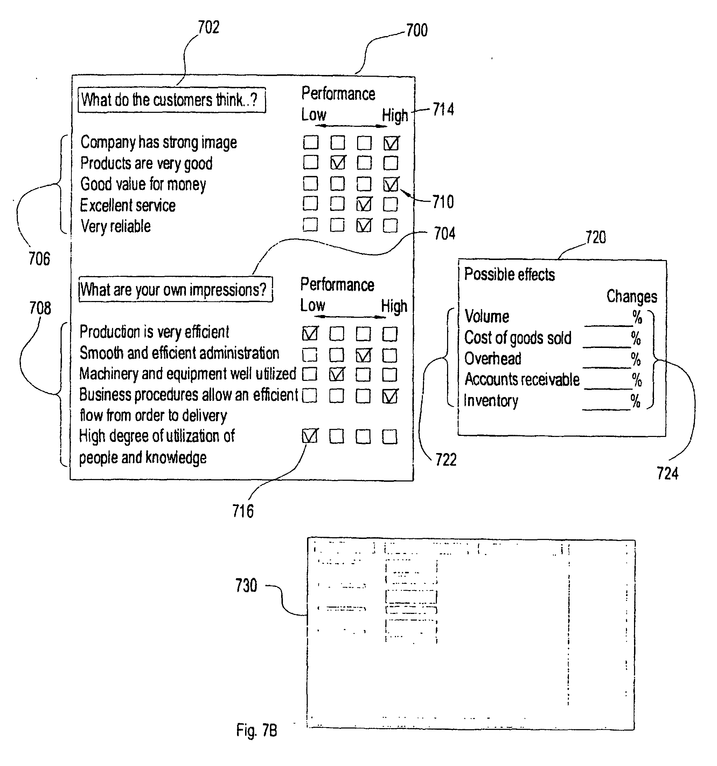

Fig 7A and 7B show embodiments of the above mentioned input interface 604 (Cf. Fig 6) for inputting soft value parameters. This embodiment has the visual appearance of a questionnaire 700 comprising at least one soft value parameter category SVPC 702,704, at least one soft value parameter SVP 706,708 for each category. Value indicators 710,712,714 are provided to indicate a relative value or degree of performance of each parameter. In this embodiment, the value indicators are realised as a row of checkboxes. where a relatively low value is indicated to the left and a relatively high value to the right. This embodiment of the input interface is provided with means for entering a parameter value using a standard mouse pointer functionality of a standard computer to tick the appropriate checkbox. In another embodiment, the questionnaire 700 may be implemented as a paper form accompanied by a simpler parameter input interface in the parameter processing device.

Examples of soft value parameter categories SVPC, here expressed in the form of questions, and soft value parameters SVP, here expressed in the form of statements to be graded or given a value are:

- What do the customers think? (SVPC1,702): Company has strong image (SVP1,706); Products are very good (SVP2,706); Good value for money (SVP3,706); Excellent service (706); Very reliable (706).

**-** What are your own impressions of the company? (SVPC2,704): Production is very efficient; (SVP4,708); Smooth and efficient administration; (SVP5,708); Machinery and equipment is well utilised; (SVP6,708); Business procedures allow an efficient flow from order to delivery (708); High degree of utilisation of people and knowledge (708).

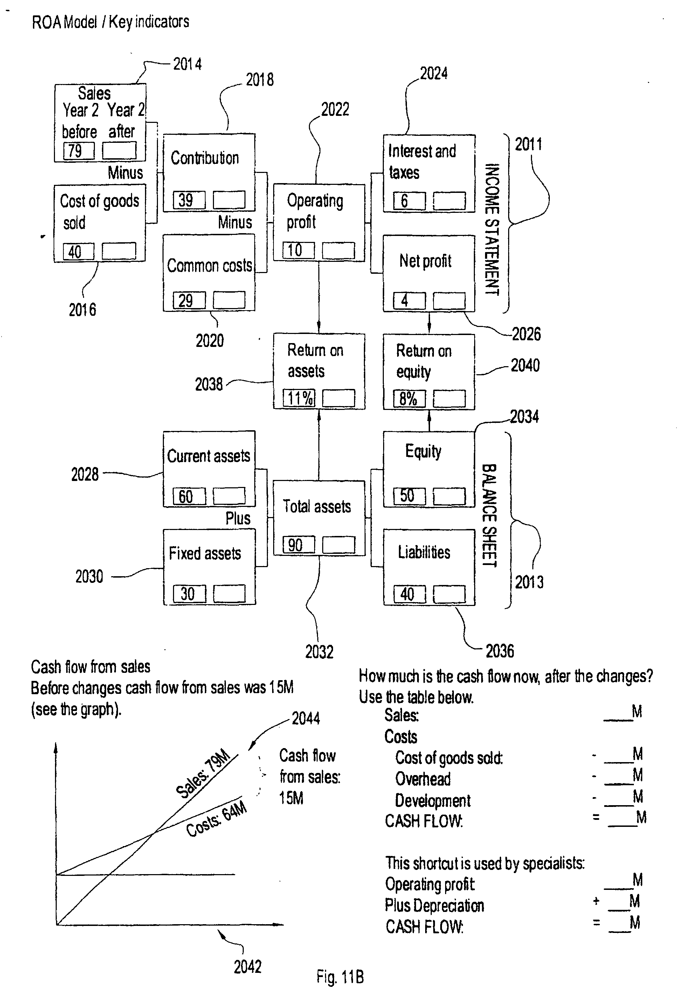

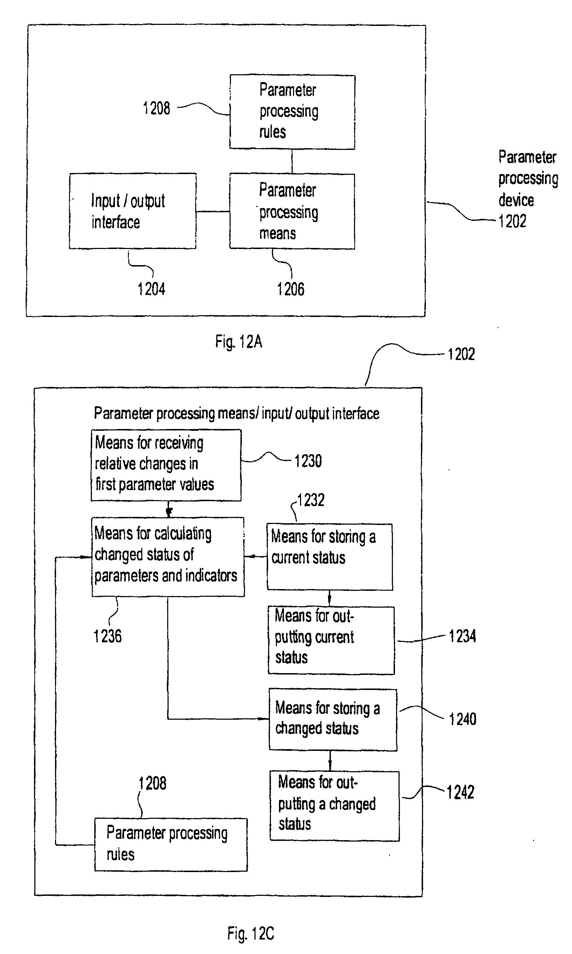

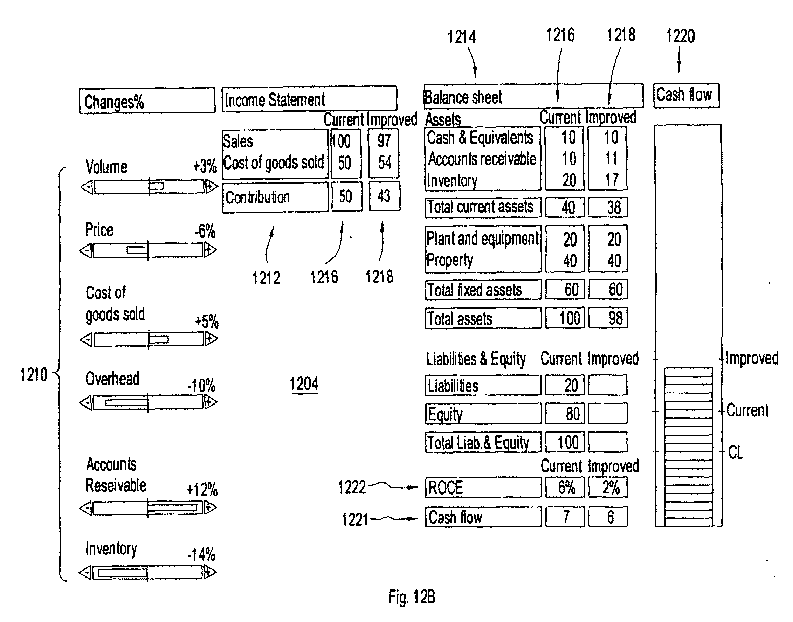

Once having entered a value for each soft value parameter the parameters are processed by means of the parameter compiler 606 and the description generator 610 (Cf. Fig 6). Consequences or possible effects in terms of relative changes on different hard value parameters of the business are calculated and shown in a status indication device. In Fig 7B an example of such a status indication device or interface 720 is shown. The exemplifying interface 720 comprises a field indicating relative value changes in percent of hard value parameters (722) such as volume of goods sold, cost of goods sold, overhead, accounts receivable and inventory. In fig 7B is also shown the interface of a means for simulating the effects on the business status in terms of a selected first set of hard value parameters dependent on relative changes in a selected second set of hard value parameters. This means is further explained below in connection with Fig 12A and 12B.

Fig 8 shows an embodiment of an output interface 800 devised to output a description of company characteristics in accordance with the processed input soft value parameters. In this embodiment a plurality of soft value parameters are summed in two status indication parameters SIP1, SIP2 plotted in a two dimensional diagram 801, also called evaluation chart. with parameter value increasing along the axes. Examples of status indication parameters are ability to create Customer value (SIP1) and to use resource with Cost efficiency (SIP2). In the evaluation chart 801, a relative value 802 of the status indication parameters is indicated with a cross 802, and suggested goal parameter values for the simulated company are also indicated, preferably by means of a different indication symbol 804. The shown embodiment of the output interface 800 also comprises presentation means 806 for a set of action parameters AP1 - AP7 grouped into different action parameter categories 808,810,812. Examples of action parameters are: -Improve customer relations; -Improve product portfolio, e.g. with regard to price, quality, performance; or action parameters such as the examples given above in connection with .Fig4. The action parameters may also be given on the level of action parameter steps, again referring to Fig 4.

A flow diagram of the steps for operating an embodiment of a status description generator is shown in Fig 9. This embodiment comprises the steps of:

902 Starting;
904 Inputting values for soft value parameters SVP;
906 If values for all soft value parameters SVP has been input, then further to step 908 else back to step 904;
908 Compiling soft value parameters SVP to status indication parameters SIP;
910 Presentation of status indication parameters SIP and action parameters AP:
912 Stopping.

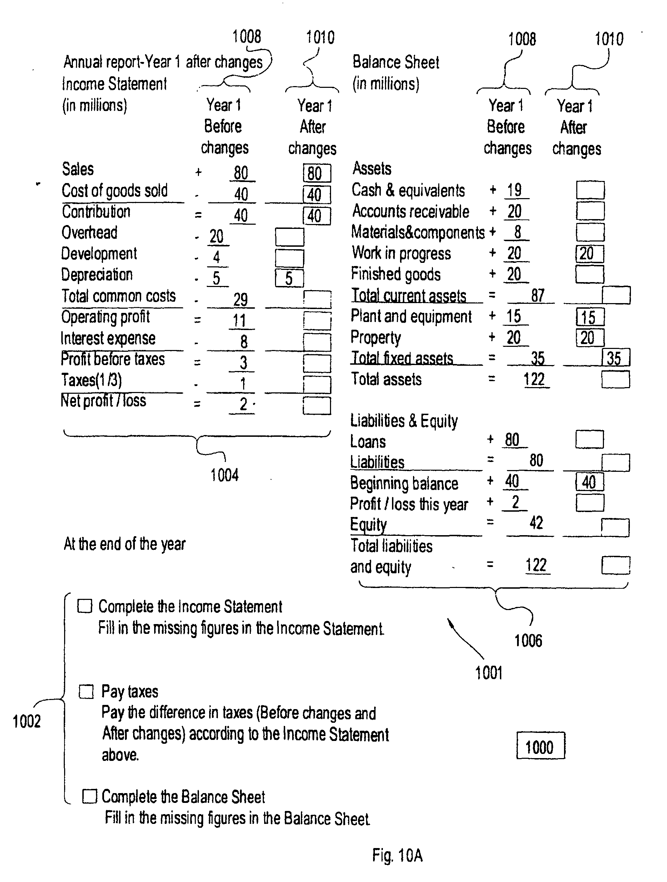

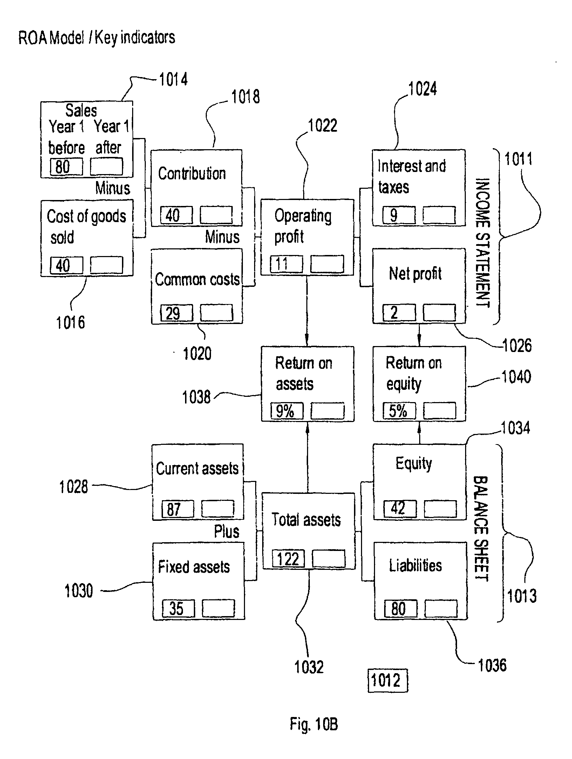

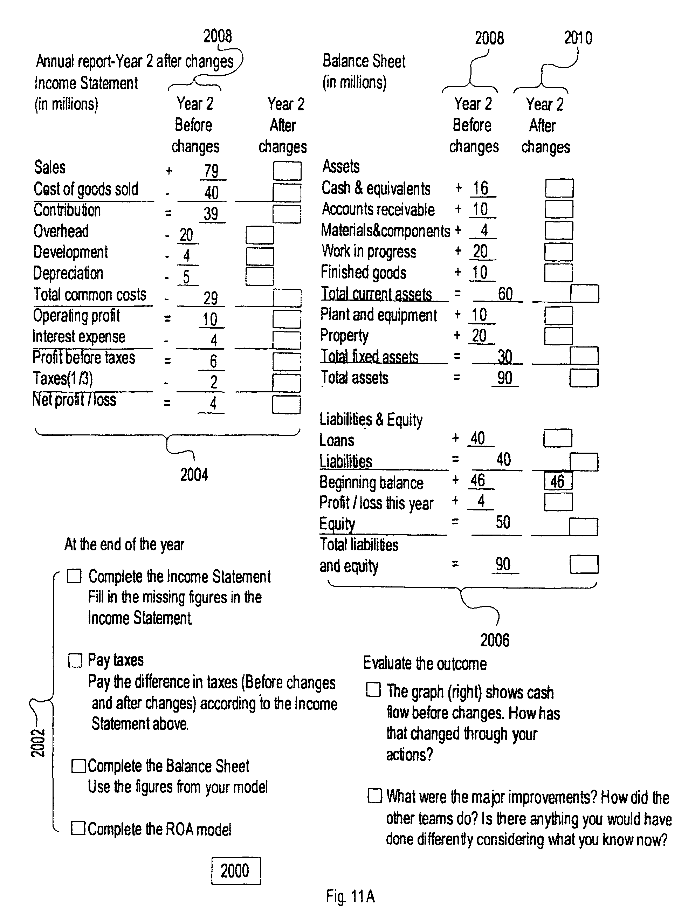

Fig 10A,10B,11A,11B show examples of means for processing and outputting complex inter-dependencies between parameters. In this embodiment of the invention, the computerised part of the system is arranged to support the updating of the model. Current parameter values of the simulated business process are input and processed, and consequences on these or other parameters of said current values are presented to the users. Also, output parameters to be transferred to the model are produced and output to the users. In one embodiment, there is a guide to updating operations to be carried out in the model. So, for example, at a certain stage of the simulation, parameters corresponding to interest for loans should be paid and this is illustrated on the model by moving value markers or value carriers corresponding to the amount to be paid from cash area 122 (Fig 1) to lender assets area 124 (Fig 1). Another parameter to be updated in the model is depreciation of equipment and likewise value markers or carriers are moved from plant and equipment area 132 (Fig 1) to depreciation area 113 (Fig 1).

In order to better communicate model updating information from the parameter processing device to the users, pictures of the model are presented on a screen interface together with indications of the parameters parameter values to be changed on the model. So, after a parameter processing has been carried out, a model is shown and e.g. an arrow and a number indicating what parameter value in the form of value markers or value carriers should be moved from a first to a second storage area on the model. This visual updating information is in some embodiments also supplemented with audio information, e.g. in the form of a synthetic voice presented through a speaker.

Fig 10A shows a first input/output interface 1000, also called dependency parameter interface, comprised in the means for processing complex inter-dependencies between parameters, having means for inputting and outputting values for interdependent parameters. The embodiment of the input interface 1000 shown in Fig 10A has the visual appearance of an annual report 1001 for a business. The annual report 1001 comprises input/output fields for an income statement 1004 and input/output fields for a balance sheet 1006, both having conventional business parameters. In first fields 1008, parameter values of a first status are presented and in second fields 1010, parameter values of a second status after changing input parameter values are presented. The input/output interface also comprises a field for presenting action parameters 1002, where action parameters to be input into or carried out in the simulation are presented to the users. The parameter processing device consequently also comprise means for calculating each said parameter dependent on input parameter values. Examples of action parameters or action parameter steps are: Complete the income statement, fill in missing figures; Pay Taxes, pay the difference in taxes before changes and after changes according to the Income Statement shown in the interface; Complete the balance sheet, fill in the missing figures.

Fig 10 B shows a second input/output interface for key indicators 1012, also called key indicator interface, comprised in the means for processing complex inter-dependencies between parameters. Key indicators are such parameters that in most cases are dependent on a plurality of other parameters and that represent important aspects of the simulated process. In the shown embodiment, the key indicator input/output interface 1012 is designed for a return-on-assets model (ROA model), thus showing the return on assets and the return on equity for different parameter values of the current simulation. A plurality of dependency parameter input/output fields 1014-1036 and dependent key indicator input/output fields 1038,1040 are provided to show the parameter dependencies as well as to provide output of parameter values for a current status. Typically dependency parameters also have interdependencies, which in the shown input/output interface 1012 are shown with connecting lines or arrows between the parameter fields. These fields also include fields for inputting new values on dependency parameters as well as for outputting new dependent parameter values. In the embodiment shown in Fig 10B, the left part of the input/output fields show current values and the right part is designated for inputting new values. Dependent key indicators are processed and calculated in a per se known manner, dependent on the application of the invention. The parameter processing device consequently also comprise means for calculating each said parameter dependent on input parameter values.

Still referring to Fig 10B, the shown embodiment comprises dependency parameters coupled to the income statement 1011 and the balance sheet 1013 of a simulated business process. As mentioned above, the dependent key indicators are in this case return on asset 1038 and return on equity 1040. The income statement parameters 1011 comprise: 1014 Sales; 1016 Cost of goods sold; 1018 Contribution; 1020 Common costs; 1022 Operating profit; 1024 Interest and taxes; and 1026 Net profit;

whereas the balance sheet parameters 1013 comprise: 1028 Current assets; 1030 Fixed assets; 1032 Total assets; 1034 Equity; and 1036 Liabilities.

In other applications of the invention, the parameters may of course be different.

The parameter processing device also comprise means for calculating each said parameter dependent on input parameter values. In preferred embodiments, the shown interfaces utilise a standard computer screen, a keyboard and a mouse pointer to present and receive parameter values. When entering input parameter values through the interfaces, the parameter processing parameter device checks whether the entered values are correct or not. In the above shown embodiment, one interface and corresponding processing means are provided for each simulated quarter or year. Furthermore, one embodiment of the parameter processing device also delivers action parameters in accordance with predetermined rules. For example, one combination of parameter or key indicator values may generate proposed action parameters such as "sell more" or "raise prices", whereas another combination may result in action parameters such as "cut costs" or use less capital".

Fig 11A and 11B show interfaces similar to those of Fig 10A and 10B, however representing an example of parameter values for a second simulated year after changed parameters and/or carried out actions in accordance with certain action parameters. In Fig 11A and 11B items corresponding to items of Fig 10A and 10B have reference numerals 2000-2040, the last figures being the same. Fig 11B further show the presentation of another key indicator, in this case an indicator which is important for the running simulated process, viz. cash flow. Thus the parameter processing device comprises means for calculating cash flow and means 2042 for showing the dependency on other parameters and the change in cash flow 2044.

Fig 12A and 12B show exemplifying embodiments of means, comprised in the parameter processing device, to simulate effects of relative changes in input control parameters on output key parameters of a simulated process. In the shown embodiment the simulated process is a business process as in the previously shown embodiments. Fig 12A shows an embodiment of a parameter processing device 1202 comprising an input/output interface 1204 coupled to parameter processing means 1206, which in its turn is coupled to means for storing parameter processing rules 1208. As shown in Fig 12B, the interface 1204 comprises means 1210 for inputting relative changes in first parameters, e.g. running process parameters, means 1212 for outputting a current status 1216 and a changed status 1218 of dependency parameters and means 1220, 1221,1222 for outputting current status and changed status of key indicators. In the shown embodiment of the interface the input of relative changes 1210 is such that a change in percentage of a current value is input, e.g. by clicking on change symbols (-,+) by means of a mouse pointer. The consequence on dependency parameters is thereupon calculated and presented in changed status fields 1218, 1220.

The parameter processing device further comprises, Cf. also Fig 12C, means 1230 for receiving relative changes in said first parameters, e.g. running process parameters, means 1232 for storing a current status 1216, means 1236 for calculating changed status or value of parameters and indicators dependent on the input relative changes, the current status and the pre-stored parameter processing rules. Furthermore, the device comprises means 1240 for storing a changed status 1218 of dependency parameters and means 1220,1221,1222,1234,1242 for outputting current status and changed status of key indicators.

Examples of first or running process parameters 1210 are Volume, Price, Cost of goods sold, Overhead, Accounts receivable and Inventory. Examples of dependency parameters are such relating to an income statement e. g. Sales and Cost of goods sold, and summed in the parameter Contribution. Further dependency parameters are such relating to a balance sheet, e.g. assets in the form of Cash&Equivalents, Accounts receivable and Inventory summed in the parameter Total current assets, Plant & Equipment and Property summed in the parameter Total fixed assets, all possibly summed in the parameter Total assets. Still further dependency parameters relating to the balance sheet are e.g. Liabilities and Equity, summed in the parameter Total liabilities&Equity. Examples of key indicators are:

$$ROCE = Operating\ Profit/(Total\ assets - Cash\&Equivalents);$$

and

$$Cash\ Flow = Improved\ Depreciation + Improved\ Operating\ Profit + Current\ Accounts$$

$$Receivable + Current\ Inventory - (Improved\ Accounts\ Receivable + Improved\ Inventory).$$

The described embodiment of the parameter processing means comprises means for calculating each said parameter dependent on input parameter values or changes in input parameter values.

Whereas the invention has been described by means of embodiments designed for simulating a business process using certain parameters, it is understood that the invention may be adjusted to other specific simulations without departing from the scope of the claims. Embodiments of the invention that are implemented by means of specifically designed software programs comprise the described functional means recorded on a recording medium or received as a stream of digital data transferred by means of a wired or a wireless data- or telecommunications system.

**Claims**

1. A system for simulating a business process, comprising a model (506) for illustrating business conditions, the model having:

   - tokens for indicating a parameter value;
   - a board, itself comprising areas representing parameters in the form of interested parties of a business, activities of said business, different assets of said business and areas for storing an indication of the value of said parameters,

   **characterised by:**

   a parameter processing device (502, 600, 1202) being operatively associated with said model (506) and devised for calculating a business condition dependent on parameter values and on predefined rules, and for generating action parameters for performing actions in said model dependent on the calculated business condition, the processing device having:

   - input means (604, 700, 1000, 1012, 2000, 1204, 1210) for inputting parameter values from said model or new parameter values;
   - - processing means (606, 610, 1206) for producing an updated status of said business process dependent on said input parameter values, and for generating action parameters for updating said model;
   - output means (612, 800, 1000, 1012, 2000, 1204, 1216, 1218, 1220, 1221, 1222) for outputting consequence parameter values indicating a status dependent on said input parameter values, and action parameters indicating a calculated updating of the model.

2. A system as recited in claim 1, in which said processing device further comprises presentation means for presenting said consequence parameters and action parameters.

**3.** A system as recited in claim 1, in which said processing device further comprises means for changing input parameter values or relative changes of input parameter values.

**4.** A system as recited in claim 1, in which said input parameters comprise soft value parameters (SVP) indicating a system users' opinion on a simulated business, as indicated by an answer to a question or a grading of a statement.

**5.** A system as recited in claim 1, in which said input parameters comprise dependency parameters corresponding to parameters in an annual report for a business, the processing device having an input/output interface (1000, 1012, 2000) for said dependency parameters and/or said output parameters are key indicator parameters such as ROCE or Cash Flow.

**6.** A system as recited in claim 5, in which said processing device further comprises

- means for processing interdependencies between said dependency parameters, and
- updating means devised to support updating of the model, said updating means being arranged to show to a system user a picture of said model, using said presentation means, together with indications of parameter values to be changed on the model.

**7.** A system as recited in claim 1, in which said processing device further comprises

- a database (608, 1208) being devised to store predetermined rules for interpreting and compiling input parameter values and combinations of input parameter values into second parameters, said database being communicatively coupled to said parameter processing means;
- a description generator (610) for generating a status description by means of second parameters; and
- an output interface (612, 1202) for outputting said second parameters.

**8.** A system as recited in claim 7, wherein said database is further devised to store predetermined action parameters to be put into the simulation, said action parameters being dependent on the current status according to predetermined rules.

**9.** A system as recited in claim 1, in which the parameter processing means (1202,1208) is further devised to process changes in parameter values and an input/output interface (1204) including means (1210) for inputting relative changes in first parameter values and means (1212,1214,1216,1220,1221,1222) for outputting changes in second parameter values.

**10.** A parameter processing device for use in a system for simulating a business process, which system comprises a model (506) for illustrating business conditions, the device comprising:

- a parameter input interface (604) for inputting first parameters from said model;
- parameter processing means (606) for processing said first parameters; and **characterised in that** it further comprises
- a database (608) being devised to store predetermined rules for interpreting and compiling input parameter values and combinations of input parameter values into second parameters, said database being communicatively coupled to said parameter processing means;
- a description generator (610) for generating a status description by means of second parameters; and
- an output interface (612) for outputting said second parameters, which second parameters comprise action parameters proposing actions to be taken in said model based on said generated status description.

**11.** A parameter processing device as recited in claim 10, wherein said database is further devised to store predetermined action parameters to be put into the simulation, said action parameters being dependent on the current status according to predetermined rules.

**12.** A parameter processing device as recited in claim 10 or 11, further comprising parameter processing means (1202,1208) devised to process changes in parameter values and an input/output interface (1204) including means (1210) for inputting relative changes in first parameter values and means (1212,1214,1216,1220,1221,1222) for outputting processed changes in second parameter values.

**13.** A computer program product for simulating a business process, comprising:

a recording medium; and **characterised in that** it further comprises

means, recorded on the recording medium, for establishing a business condition with business parameter values for a model (506) having tokens for indicating a parameter value, and a board, itself comprising areas representing parameters in the form of interested parties of a business, activities of said business, different assets of said business and areas for storing an indication of the value of said parameters;

means, recorded on the recording medium, for calculating a business condition dependent on parameter values and on predefined rules,

means, recorded on the recording medium, for inputting and receiving parameter values from said model or new parameter values;

means, recorded on the recording medium, for producing an updated condition of said business process dependent on said input parameter values,

means, recorded on the recording medium, for generating action parameters for performing actions in said model and for updating said model dependent on the calculated business condition,

- means, recorded on the recording medium, for outputting consequence parameter values indicating a status or a condition dependent on said input parameter values, and action parameters indicating a calculated updating of the model.

**14.** A computer program product as recited in claim 13, further comprising means, recorded on the recording medium, for presenting on presentation means said consequence parameters and action parameters.

**15.** A computer program product as recited in claim 13, further comprising means, recorded on the recording medium, for changing input parameter values or indicating relative changes of input parameter values.

**16.** A computer program product as recited in claim 13, means, recorded on the recording medium, for representing input parameters comprising soft value parameters (SVP) indicating a system users' opinion on a simulated business, as indicated by an answer to a question or a grading of a statement.

**17.** A computer program product as recited in claim 13, means, recorded on the recording medium, for representing input parameters comprising dependency parameters corresponding to parameters in an annual report for a business, the processing device having an input/output interface (1000, 1012, 2000) for said dependency parameters and/or said output parameters are key indicator parameters such as ROCE or Cash Flow.

**18.** A computer program product as recited in claim 17, further comprising means, recorded on the recording medium, for:

- processing interdependencies between said dependency parameters, and
- supporting updating of the model, by presenting to a system user a picture of said model, using said presentation means, together with indications of parameter values to be changed on the model.

**19.** A computer program product as recited in claim 13, further comprising means, recorded on the recording medium, for:

- storing predetermined rules for interpreting and compiling input parameter values and combinations of input parameter values into second parameters, said database being communicatively coupled to said parameter processing means;
- generating a status description by means of second parameters; and
- outputting said second parameters;
- updating the model by means of said second parameters.

**20.** A computer program product as recited in claim 19, further comprising means, recorded on the recording medium, for storing predetermined action parameters to be put into the simulation, said action parameters being dependent on the current status according to predetermined rules.

**21.** A computer program product as recited in claim 13, further comprising means, recorded on the recording medium, for:

inputting relative changes in first parameter values;

processing changes in parameter values; and
outputting changes in second parameter values.

**Patentansprüche**

1. System zur Simulation eines Geschäftsprozesses, mit einem Modell (506) zum Darstellen von Geschäftsbedingungen, wobei das Modell aufweist:

   - Marker/Token zum Angeben eines Parameterwertes,
   - eine Tafel, die Bereiche enthält, die Parameter in der Form von interessierten Parteien eines Geschäftes, Aktivitäten des Geschäftes, verschiedenen Geldwerten des Geschäftes darstellen und Bereiche zum Speichern einer Angabe des Wertes der Parameter enthält,

   **gekennzeichnet durch**:

   eine Parameterverarbeitungseinreichtung (502,600,1202), die operativ mit dem Model (506) verbunden ist und vorgesehen ist, um eine Geschäftsbedingung in Abhängigkeit von Parameterwerten und nach vorbestimmten Regeln zu berechnen, und um Aktionsparameter zur Durchführung von Aktionen in dem Modell in Abhängigkeit von der berechneten Geschäftsbedingung zu erzeugen, wobei die Verarbeitungseinrichtung enthält:

   - Eingabemittel (604,700,1000,1012,2000,1204,1210) zum Eingeben von Parameterwerten von dem Modell oder von neuen Parameterwerten,
   - Verarbeitungsmittel (606,610,1206) zum Erzeugen eines aktualisierten Status des Geschäftsprozesses in Abhängigkeit von den Eingabeparameterwerten und zum Erzeugen von Aktionsparametern zum Aktualisieren des Modells,
   - Ausgabemittel (612,800,1000,1012,2000,1204,1216,1218,1220, 1221,1222) zum Ausgeben von Konsequenzparameterwerten, die einen Status in Abhängigkeit von den Eingabeparameterwerten anzeigen, und Aktionsparametern, die eine berechnete Aktualisierung des Modells angeben.

2. System nach Anspruch 1, wobei die Verarbeitungseinrichtung ferner eine Anzeigeeinrichtung zum Darstellen der Konsequenzparameter und der Aktionsparameter enthält.

3. System nach Anspruch 1, wobei die Verarbeitungseinrichtung ferner Mittel enthält zum Ändern von Eingabeparameterwerten oder zum relativen Ändern von Eingabeparameterwerten.

4. System nach Anspruch 1, wobei die Eingabeparameter weiche Wertparameter (SVP) enthalten, die eine Meinung eines Systembenutzers über ein simuliertes Geschäft angeben, wie durch eine Antwort auf eine Frage oder eine Einstufung einer Erklärung angegeben ist.

5. System nach Anspruch 1, wobei die Eingabeparameter Abhängigkeitsparameter enthalten, die Parametern in einem Jahresbericht für ein Geschäft entsprechen, wobei die Verarbeitungseinrichtung ein Eingabe/Ausgabe-Interface (1000,1012,2000) für die Abhängigkeitsparameter hat und/oder die Ausgabeparameter Schlüsselindikatorparameter sind wie ROCE oder Geldfluß.

6. System nach Anspruch 5, wobei die Verarbeitungseinrichtung ferner enthält:

   - Mittel zum Verarbeiten von gegenseitigen Abhängigkeiten zwischen den Abhängigkeitsparametern und
   - Aktualisierungsmittel, die das Aktualisieren des Modells unterstützen, wobei die Aktualisierungsmittel angeordnet sind, um einem Systembenutzer ein Bild von dem Modell zu zeigen, unter Verwendung der Anzeigemittel, zusammen mit Indikatoren von Parameterwerten, die in dem Modell zu ändern sind.

7. System nach Anspruch 1, wobei die Verarbeitungseinrichtung ferner enthält:

   - eine Datenbank (608,1208) zum Speichern vorbestimmter Regeln zum Interpretieren und Kompilieren von Eingabeparameterwerten und Kombinationen von Eingabeparameterwerten in zweite Parameter, wobei die Datenbank kommunikativ mit den Parameterverarbeitungsmitteln gekoppelt ist,

- einen Beschreibungsgenerator (610) zum Erzeugen einer Statusbeschreibung mittels zweiter Parameter und
- ein Ausgabeinterface (612,1202) zum Ausgeben der zweiten Parameter.

8. System nach Anspruch 7, wobei die Datenbank ferner vorgesehen ist, um vorbestimmte Aktionsparameter zu speichern, die in die Simulation eingegeben werden, wobei die Aktionsparameter abhängig sind von dem gegenwärtigen Status entsprechend den vorbestimmten Regeln.

9. System nach Anspruch 1, wobei die Parameterverarbeitungsmittel (1202,1208) außerdem vorgesehen sind, um Änderungen in den Parameterwerten zu verarbeiten, und ein Eingabe/Ausgabe-Interface (1204) Mittel (1210) zum Eingeben relativer Änderungen bei den ersten Parameterwerten und Mittel (1212,1214, 1216,1220,1221,1222) enthält zum Ausgeben von Änderungen bei den zweiten Parameterwerten.

10. Parameterverarbeitungseinrichtung zur Benutzung in einem System zur Simulation eines Geschäftsprozesses, wobei das System ein Modell (506) zum Darstellen von Geschäftsbedingungen enthält, wobei die Einrichtung enthält:

- ein Parametereingabeinterface (604) zum Eingeben von ersten Parametern des Modells,
- Parameterverarbeitungsmittel (606) zum Verarbeiten der ersten Parameter **gekennzeichnet dadurch, daß** sie ferner enthält
- eine Datenbank (608) zum Speichern vorbestimmter Regeln zum Interpretieren und Kompilieren von Eingangsparameterwerten und Kombinationen von Eingabeparameterwerten in zweite Parameter, wobei die Datenbank kommunikativ mit den Parameterverarbeitungsmitteln gekoppelt ist,
- einen Beschreibungsgenerator (610) zum Erzeugen einer Statusbeschreibung mittels zweiter Parameter und
- ein Ausgabeinterface (612) zum Ausgeben der zweiten Parameter, wobei die zweiten Parameter Aktionsparameter enthalten, die Aktionen vorschlagen, die in dem Modell auf der Basis der erzeugten Statusbeschreibung durchgeführt werden sollen.

11. Parameterverarbeitungseinrichtung nach Anspruch 10, wobei die Datenbank ferner vorgesehen ist, um vorbestimmte Aktionsparameter zu speichern, die in die Simulation einzugeben sind, und wobei die Aktionsparameter abhängig sind von dem gegenwärtigen Status gemäß den vorbestimmten Regeln.

12. Parameterverarbeitungseinrichtung nach Anspruch 10 oder 11, ferner enthaltend Parameterverarbeitungsmittel (1202,1208) zur Verarbeitung von Änderungen in den Parameterwerten, und ein Eingabe/Ausgabeinterface (1204) mit Mitteln (1210) zum Eingeben von relativen Änderungen in den ersten Parameterwerten und Mitteln (1212,1214, 1216,1220,1221,1222) zum Ausgeben von verarbeiteten Änderungen in den zweiten Parameterwerten.

13. Computerprogrammprodukt zur Simulation eines Geschäftsprozesses, mit einem Aufzeichnungsmedium, **dadurch gekennzeichnet,**
**daß** es ferner enthält:

- Mittel, die auf das Aufzeichnungsmedium aufgezeichnet sind, um eine Geschäftsbedingung mit Geschäftsparameterwerten für ein Modell (506) einzurichten, das Marker/Token zum Anzeigen eines Parameterwertes und eine Tafel hat, die Bereiche enthält, die Parameter in der Form von interessierten Parteien eines Geschäftes, Aktivitäten des Geschäftes, verschiedenen Geldwerten des Geschäftes darstellen, und Bereiche zum Speichern einer Anzeige des Wertes der Parameter aufweist,
- Mittel, die auf das Aufzeichnungsmedium aufgezeichnet sind, um eine Geschäftsbedingung in Abhängigkeit von Parameterwerten und von vorbestimmten Regeln zu berechnen und
- Mittel, die auf das Aufzeichnungsmedium aufgezeichnet sind, um Parameterwerte von dem Model oder neue Parameterwerte einzugeben und zu empfangen,
- Mittel, die auf das Aufzeichnungsmedium aufgezeichnet sind, um eine aktualisierte Bedingung des Geschäftsprozesses in Abhängigkeit von den Eingabeparameterwerten zu erzeugen,
- Mittel, die auf das Aufzeichnungsmedium aufgezeichnet sind, um Aktionsparameter zum Durchführen von Aktionen in dem Modell und zum Aktualisieren des Modells in Abhängigkeit von der berechneten Geschäftsbedingung zu erzeugen,
- Mittel, die auf das Aufzeichriungsmedium aufgezeichnet sind, um Konsequenzparameterwerte auszugeben, die einen Status oder eine Bedingung in Abhängigkeit von den Eingabeparameterwerten angeben, und Aktionsparameter, die eine berechnete Aktualisierung des Modells angeben.

**14.** Computerprogrammprodukt nach Anspruch 13, ferner enthaltend Mittel, die auf das Aufzeichnungsmedium aufgezeichnet sind, um auf Darstellungsmitteln die Konsequenzparameter und Aktionsparameter darzustellen.

**15.** Computerprogrammprodukt nach Anspruch 13, ferner enthaltend Mittel, die auf das Aufzeichnungsmedium aufgezeichnet sind, um Eingabeparameterwerte zu ändern oder um relative Änderungen der Eingabeparameterwerte anzugeben.

**16.** Computerprogrammprodukt nach Anspruch 13, ferner enthaltend Mittel, die auf das Aufzeichnungsmedium aufgezeichnet sind, um Eingabeparameter darzustellen, die weiche Parameterwerte (SVP) enthalten, die eine Meinung eines Systembenutzers über ein simuliertes Geschäft angeben, wie durch eine Antwort auf eine Frage oder eine Abstufung einer Erklärung angegeben ist.

**17.** Computerprogrammprodukt nach Anspruch 13, ferner enthaltend Mittel, die auf das Aufzeichnungsmedium aufgezeichnet sind, um Eingabeparameter darzustellen, die Abhängigkeitsparameter enthalten, die Parametern in einem Jahresbericht für ein Geschäft entsprechen, wobei die Verarbeitungseinrichtung ein Eingabe/Ausgabe-Interface (1000,1012, 2000) hat für die Abhängigkeitsparameter und/oder die Ausgabeparameter Schlüsselindikatorparameter wie ROCE oder Geldfluß sind.

**18.** Computerprogrammprodukt nach Anspruch 17, ferner enthaltend Mittel, die auf das Aufzeichnungsmedium aufgezeichnet sind um:

- gegenseitige Abhängigkeiten zwischen den Abhängigkeitsparametern zu verarbeiten und
- das Aktualisieren des Modells zu unterstützen, indem einem Systembenutzer ein Bild des Modells unter Verwendung der Anzeigemittel zusammen mit Anzeigen der Parameterwerte, die in dem Modell zu ändern sind, präsentiert wird.

**19.** Computerprogrammprodukt nach Anspruch 13, ferner enthaltend Mittel, die auf das Aufzeichnungsmedium aufgezeichnet sind um:

- vorbestimmte Regeln zum Interpretieren und Kompilieren von Eingabeparameterwerten und Kombinationen von Eingabeparameterwerten in zweite Parameter zu speichern, wobei die Datenbank kommunikativ mit den Parameterverarbeitungsmitteln gekoppelt ist,
- eine Statusbeschreibung mittels der zweiten Parameter zu erzeugen, und
- die zweiten Parameter auszugeben,
- das Modell mittels der zweiten Parameter zu aktualisieren.

**20.** Computerprogrammprodukt nach Anspruch 19, ferner enthaltend Mittel, die auf das Aufzeichnungsmedium aufgezeichnet sind, um vorbestimmte Aktionsparameter zu speichern, die in die Simulation einzugeben sind, wobei die Aktionsparameter abhängig sind von dem gegenwärtigen Status entsprechend den vorbestimmten Regeln.

**21.** Computerprogrammprodukt nach Anspruch 13, ferner enthaltend Mittel, die auf das Aufzeichnungsmedium aufgezeichnet sind, um:

- relative Änderungen in den ersten Parameterwerten einzugeben,
- Änderungen in den Parameterwerten zu verarbeiten und
- Änderungen in den zweiten Parameterwerten auszugeben.

**Revendications**

**1.** Système de simulation de processus de transaction commerciale comportant: un modèle (506) pour illustrer les conditions de la transaction , le modèle comprenant:

- des jetons pour indiquer une valeur de paramètre;
- un tableau, lui-même comportant des zones représentant des paramètres sous la forme de parties de la transaction concernées, des activités de ladite transaction, différents actifs de ladite transaction et des zones d'enregistrement d'une indication de la valeur desdits paramètres,

**caractérisé par:**

un dispositif de traitement de paramètres (502, 600, 1202) associé en fonctionnement audit modèle (506) et conçu pour calculer une condition de transaction en fonction de valeurs de paramètres et de règles prédéfinies et pour générer des paramètres d'action pur réaliser des actions dans ledit modèle en fonction de la condition de transaction calculée, le dispositif de traitement comprenant:

- un moyen d'entrée (604, 700, 1000, 1012, 2000, 1204, 1210) pour entrer des valeurs de paramètres issues dudit modèle ou de nouvelles valeurs de paramètres;
- un moyen de traitement (606, 610, 1206) pour produire un état mis à jour dudit processus de transaction commerciale en fonction des valeurs de paramètres d'entrée et pour générer des paramètres d'action pour mettre à jour ledit modèle;
- un moyen de sortie (612, 800, 1000, 1012, 2000, 1204, 1216, 1218, 1220, 1221, 1222) pour générer en sortie des valeurs de paramètres de conséquence qui indiquent un état dépendant desdites valeurs de paramètres d'entrée, et des paramètres d'action qui indiquent une mise à jour calculée du modèle.

2. Système selon la revendication 1, dans lequel ledit dispositif de traitement comprend en outre un moyen de présentation pour présenter lesdits paramètres de conséquence et lesdits paramètres d'action.

3. Système selon la revendication 1, dans lequel ledit moyen de traitement comprend en outre un moyen de modification des valeurs de paramètres d'entrée ou apporter aux valeurs des paramètres d'entrée des modifications relatives.

4. Système selon la revendication 1, dans lequel lesdits paramètres d'entrée comprennent des paramètres de valeur temporaire (SVP -Soft Value Parameter) qui indiquent une opinion de l'utilisateur du système sur une transaction simulée comme indiquée par une réponse à une question ou une évaluation d'un état.

5. Système selon la revendication 1, dans lequel lesdits paramètres d'entrée comprennent des paramètres de dépendance correspondant à des paramètres figurant dans un rapport annuel relatif à une transaction commerciale, le dispositif de traitement comprenant une interface d'entrée/sortie (1000, 1012, 2000) pour lesdits paramètres de dépendance et/ou lesdits paramètres de sortie sont des paramètres indicateurs clé tels que le RCI ou le flux monétaire.

6. Système selon la revendication 5, dans lequel ledit dispositif de traitement comprend en outre:

- un moyen de traitement des interdépendances entre lesdits paramètres de dépendance, et
- un moyen de mise à jour conçu pour gérer la mise à jour du modèle , ledit moyen de mise à jour étant configuré pour présenter à l'utilisateur du système une image dudit modèle , en utilisant ledit moyen de présentation, en même temps que les indications de valeurs de paramètres à modifier sur le modèle.

7. Système selon la revendication 1, dans lequel ledit dispositif de traitement comprend en outre:

- une base de données (608, 1208) conçue pour enregistrer des règles prédéterminées permettant d'interpréter et de compiler des valeurs de paramètres d'entrée et des combinaisons de valeurs de paramètres d'entrée en deuxièmes paramètres, ladite base de données étant reliée en communication audit moyen de traitement de paramètres;
- un générateur de description (610) destiné à générer une description d'état au moyen des deuxièmes paramètres; et
- une interface de sortie (612, 1202) pour générer en sortie lesdits deuxièmes paramètres.

8. Système selon la revendication 7, dans lequel ladite base de données est en outre conçue pour enregistrer des paramètres d'action prédéterminés à intégrer à la simulation , lesdits paramètres d'action dépendant de l'état en cours d'après les règles prédéterminées.

9. Système selon la revendication 1, dans lequel le moyen de traitement des paramètres (1202, 1208) est en outre conçu pour traiter les modifications apportées aux valeurs de paramètres et une interface d'entrée/sortie (1204) comportant un moyen (1210) pour entrer les modifications relatives apportées aux premières valeurs de paramètres et un moyen (1212, 1214, 1216, 1220, 1221, 1222) pour générer en sortie les modifications apportées aux valeurs de deuxièmes paramètres.

**10.** Dispositif de traitement de paramètres destiné à être utilisé dans un système de simulation d'un processus de transaction commerciale, lequel système comprend un modèle (506) pour illustrer les conditions de la transaction, le dispositif comprenant

- une interface d'entrée de paramètres (604) pour entrer des premiers paramètres à partir dudit modèle;
- un moyen de traitement de paramètres (606) pour traiter lesdits premiers paramètres; et **caractérisé en ce qu'**il comprend en outre:

- une base de données (608) conçue pour enregistrer des règles prédéterminées permettant d'interpréter et de compiler des valeurs de paramètres d'entrée et des combinaisons de valeurs de paramètres d'entrée en deuxièmes paramètres , ladite base de données étant reliée en communication audit moyen de traitement de paramètres;
- un générateur de description (610) pour générer une description d'état au moyen de deuxièmes paramètres; et
- une interface de sortie (612) pour générer en sortie lesdits deuxièmes paramètres, lesquels deuxièmes paramètres comprennent des paramètres d'action proposant des actions à réaliser dans ledit modèle en fonction de ladite description d état générée.

**11.** Dispositif de traitement de paramètres selon la revendication 10, dans lequel ladite base de données est en outre conçue pour enregistrer des paramètres d'action prédéterminés à intégrer à la simulation , lesdits paramètres d'action dépendant de l'état en cours d'après les règles prédéterminées.

**12.** Dispositif de traitement de paramètres selon la revendication 10 ou 11, comportant en outre un moyen de traitement de paramètres (1202, 1208) conçu pour traiter les modifications apportées aux valeurs de paramètres et une interface d'entrée/sortie (1204) comprenant un moyen (1210) pour entrer des modifications relatives apportées aux valeurs de premiers paramètres et un moyen (1212, 1214, 1216, 1220, 1221, 1222) de génération en sortie des modifications traitées des valeurs de deuxièmes paramètres.

**13.** Progiciel de simulation de processus de transaction commerciale comportant:

un support d'enregistrement; et **caractérisé en ce qu'**il comporte en outre
un moyen, enregistré sur le support d'enregistrement, d'établissement d'une condition de transaction avec des valeurs de paramètres de transaction correspondant à un modèle (506) ayant des jetons pour indiquer une valeur de paramètre et un tableau , lui-même comportant des zones représentant des paramètres sous la forme de parties d'une transaction concernées, des activités de ladite transaction, différents actifs de ladite transaction et des zones d'enregistrement d'une indication de la valeur desdits paramètres;
un moyen, enregistré sur le support d'enregistrement, de calcul d'une condition de transaction en fonction des valeurs de paramètres et de règles prédéfinies,
un moyen, enregistré sur le support d'enregistrement, d'entrée et de réception de valeurs de paramètres issues dudit modèle ou de nouvelles valeurs de paramètres,
un moyen, enregistré sur le support d'enregistrement, de production d'une condition mise à jour dudit processus de transaction en fonction desdites valeurs de paramètres d'entrée,
un moyen, enregistré sur le support d'enregistrement, de génération de paramètres d'action permettant de réaliser des actions dans ledit modèle et de mettre à jour ledit modèle en fonction de la condition de transaction calculée,
un moyen, enregistré sur le support d'enregistrement, de génération en sortie de valeurs de paramètres de conséquence qui indiquent un état ou une condition dépendant desdites valeurs de paramètres d'entrée, et des paramètres d'action qui indiquent une mise à jour calculée du modèle.

**14.** Progiciel selon la revendication 13, comportant en outre, un moyen , enregistré sur le support d'enregistrement, de présentation sur le moyen de présentation lesdits paramètres de conséquence et lesdits paramètres d'action.

**15.** Progiciel selon la revendication 13, comportant en outre un moyen, enregistré sur le support d'enregistrement, de modification de valeurs de paramètres d'entrée ou d'indication de modifications relatives de valeurs de paramètres d'entrée.

**16.** Progiciel selon la revendication 13, comportant en outre un moyen , enregistré sur le support d'enregistrement, de représentation de paramètres d'entrée comportant des paramètres de valeur temporaire (SVP -Soft Value Parameter) qui indiquent une opinion de l'utilisateur sur une transaction simulée comme indiquée par une réponse à une question ou une évaluation d'un état.

17. Progiciel selon la revendication 13, comportant en outre un moyen, enregistré sur le support d'enregistrement, de représentation de paramètres d'entrée comportant des paramètres de dépendance correspondant à des paramètres figurant dans un rapport annuel relatif à une transaction commerciale, le dispositif de traitement comprenant une interface d'entrée/sortie (1000, 1012, 2000) pour lesdits paramètres de dépendance et/ou lesdits paramètres de sortie étant des paramètres indicateurs clé tels que le RCI ou le flux monétaire.

18. Progiciel selon la revendication 17, comportant en outre un moyen , enregistré sur le support d'enregistrement, de

- traitement des interdépendances entre lesdits paramètres de dépendance, et
- gestion de la mise à jour du modèle , en présentant à l'utilisateur du système une image dudit modèle, en utilisant ledit moyen de présentation, en même temps que les indications de valeurs de paramètres à modifier sur le modèle.

19. Progiciel selon la revendication 13, comportant en outre un moyen, enregistré sur le support d'enregistrement:

- d'enregistrement de règles prédéterminées pour interpréter et compiler des valeurs de paramètres d'entrée et des combinaisons de valeurs de paramètres d'entrée en deuxièmes paramètres, ladite base de données étant reliée en communication audit moyen de traitement de paramètres;
- de génération de description d'état au moyen de deuxièmes paramètres; et
- de génération en sortie desdits deuxièmes paramètres;
- de mise à jour du modèle au moyen desdits deuxièmes paramètres.

20. Progiciel selon la revendication 19, comportant en outre un moyen, enregistré sur le support d'enregistrement, d'enregistrement de paramètres d'action prédéterminés à intégrer à la simulation, lesdits paramètres d'action dépendant de l'état en cours d'après les règles prédéterminées.

21. Progiciel selon la revendication 13, comportant en outre un moyen, enregistrée sur le support d'enregistrement:

- d'entrée de modifications relatives apportées aux valeurs de premiers paramètres.
- De traitement de modifications apportées aux valeurs de paramètres; et
- De génération en sortie de modifications apportées aux valeurs de deuxièmes paramètres.

Fig. 1A

Fig. 1B

202

## Each quarter (four times)

☐ ☐ ☐ ☐  Payment arrives.
Accounts receivable is converted into Cash.

☐ ☐ ☐ ☐  Deliver 2 batches.
Deliver the products sold, move 2 batches from Stock of
finished goods to Cost of goods sold.

☐ ☐ ☐ ☐  Invoice.
Invoice for the batches delivered 2x10M=20M.
Move this sales value from Customers' money into
Accounts receivable.

☐ ☐ ☐ ☐  Update assembly.
Move assembled products (2 batches) to Stock of finished
goods.

☐ ☐ ☐ ☐  Update manufacturing.
Move from Manufacturing to Assembly (2 batches).

☐ ☐ ☐ ☐  New production orders = pay 2x3M.
Move 2 batches from Stock of materials and components
to Manufacturing.
Pay 3M per batch from Cash.

☐ ☐ ☐ ☐  Materials and components – pay 2x2M.
Receive from Suppliers, 2 batches.
Pay 2M per batch from Cash.

☐ ☐ ☐ ☐  Pay 1M for Development.
New products (R&D), long term marketing, etc.

☐ ☐ ☐ ☐  Pay 5M for Overhead.
Sales and administration.

204

203          Fig. 2

| Highlights | Quarter |
| --- | --- |

GOOD NEWS, AND BAD...
Record sales of the top-of-the-line products causes serious delays in production and delivery.
What will happen if....
....new Innovative competitors take advantage of your difficulties to deliver? Will customer loyalty be threatened?
Sales:22M

Overhead 4M

Cost of goods sold: 10M

| Highlights | Quarter |
| --- | --- |

EXPENSIVE BOTTLENECK
Bureaucracy and inefficient handling of customized products make the overhead skyrocket this quarter.
What will happen if....the part of your business that is the least profitable is the one that grows the most? A ticking time bomb?
Sales:20M

Overhead 6M

Cost of goods sold: 10M

Fig. 3

402A
401A
402B
403A
403B
401B

**BUSINESS PROCESS**

Streamline processes

Order——Delivery
3 weeks
Order———3 days———Delivery

Plan of action   Plant & Equipment: 5M

☐ Invest in an integrated system for the entire process-from the customer's first request to delivery.
☐ Elminate stoppages and risk for errors

☐ Increace speed and accuracy throughout the process.

405A
404A
406A
405B

**MARKETING AND SALES**

Focus on volume

Is value for money
important to you?

Plan of action     Development: 1M

☐ Go with the mainstream and sell standard products at a competitive price.
☐ Sell on value for money.

☐ Limit the product range to best-selling products

404B
406B

**RESEARCH AND DEVELOPMENT**
401C

Standardize components

403C   Customized            Standardized
       products              building blocks

402C   Product range

       Plan of action          Development: 1M
406C

☐ Create a range of standardized compo-
   nents that can be combined in a flexible
405C   way.
☐ Adapt systems to facilitate cost-
   effective design to customer specifica-
   tions.
☐ Adapt design to facilitate cost-effective
   manufacturing of components and
404C   efficient assembly.

Fig. 4

Fig. 5

Fig. 6

EP 1 092 213 B1

Fig. 7A

Fig. 8

702 700

What do the customers think..?

Performance
Low ——→ High — 714

| Company has strong image | ☐ ☐ ☐ ☑ |
| Products are very good | ☐ ☑ ☐ ☐ |
| Good value for money | ☐ ☐ ☐ ☑ — 710 |
| Excellent service | ☐ ☐ ☑ ☐ |
| Very reliable | ☐ ☐ ☑ ☐ — 704 |

706

What are your own impressions?

Performance
Low ——→ High

708

| Production is very efficient | ☑ ☐ ☐ ☐ |
| Smooth and efficient administration | ☐ ☐ ☑ ☐ |
| Machinery and equipment well utilized | ☐ ☑ ☐ ☐ |
| Business procedures allow an efficient | ☐ ☐ ☐ ☑ |
| flow from order to delivery | |
| High degree of utilization of | ☑ ☐ ☐ ☐ |
| people and knowledge | |

716

720

Possible effects

| | Changes |
|---|---|
| Volume | ____ % |
| Cost of goods sold | ____ % |
| Overhead | ____ % |
| Accounts receivable | ____ % |
| Inventory | ____ % |

722

724

730

Fig. 7B

Start — 902

Input values for SVP — 904

No

Values for all SVP input? — 906

Yes

New SVP input

Compilation of SVP to SIP — 908

Presentation of SIP values and AP — 910

Stop — 912

Fig. 9

1008   1010

Annual report-Year 1 after changes
Income Statement
(in millions)

| | | Year 1 Before changes | Year 1 After changes |
|---|---|---|---|
| Sales | + | 80 | [80] |
| Cost of goods sold | - | 40 | [40] |
| Contribution | = | 40 | [40] |
| Overhead | - | 20 | ☐ |
| Development | - | 4 | ☐ |
| Depreciation | - | 5 | [5] |
| Total common costs | - | 29 | ☐ |
| Operating profit | = | 11 | ☐ |
| Interest expense | - | 8 | ☐ |
| Profit before taxes | = | 3 | ☐ |
| Taxes(1/3) | - | 1 | ☐ |
| Net profit / loss | = | 2 · | ☐ |

1004

At the end of the year

1008   1010

Balance Sheet
(in millions)

| | | Year 1 Before changes | Year 1 After changes |
|---|---|---|---|
| Assets | | | |
| Cash & equivalents | + | 19 | ☐ |
| Accounts receivable | + | 20 | ☐ |
| Materials&components | + | 8 | ☐ |
| Work in progress | + | 20 | [20] |
| Finished goods | + | 20 | ☐ |
| Total current assets | = | 87 | ☐ |
| Plant and equipment | + | 15 | [15] |
| Property | + | 20 | [20] |
| Total fixed assets | = | 35 | [35] |
| Total assets | = | 122 | ☐ |
| | | | |
| Liabilities & Equity | | | |
| Loans | + | 80 | ☐ |
| Liabilities | = | 80 | ☐ |
| Beginning balance | + | 40 | [40] |
| Profit / loss this year | + | 2 | ☐ |
| Equity | = | 42 | ☐ |
| Total liabilities and equity | = | 122 | ☐ |

1006

1001

1002

☐ Complete the Income Statement
Fill in the missing figures in the Income Statement.

☐ Pay taxes
Pay the difference in taxes (Before changes and After changes) according to the Income Statement above.

☐ Complete the Balance Sheet
Fill in the missing figures in the Balance Sheet.

1000

Fig. 10A

ROA Model / Key indicators

**Sales** 1014
Year 1 before | Year 1 after
80 |

Minus

**Cost of goods sold** 1016
40 |

**Contribution** 1018
40 |

Minus

**Common costs** 1020
29 |

**Operating profit** 1022
11 |

**Interest and taxes** 1024
9 |

**Net profit** 1026
2 |

INCOME STATEMENT 1011

**Return on assets** 1038
9% |

**Return on equity** 1040
5% |

**Current assets** 1028
87 |

Plus

**Fixed assets** 1030
35 |

**Total assets** 1032
122 |

**Equity** 1034
42 |

**Liabilities** 1036
80 |

BALANCE SHEET 1013

1012

Fig. 10B

28

Annual report-Year 2 after changes <u>2008</u>

Income Statement
(in millions)

| | | Year 2<br>Before<br>changes | Year 2<br>After<br>changes |
|---|---|---|---|
| Sales | + | 79 | ☐ |
| Cost of goods sold | - | 40 | ☐ |
| Contribution | = | 39 | ☐ |
| Overhead | - 20 | | ☐ |
| Development | - 4 | | ☐ |
| Depreciation | - 5 | | ☐ |
| Total common costs | - | 29 | ☐ |
| Operating profit | = | 10 | ☐ |
| Interest expense | - | 4 | ☐ |
| Profit before taxes | = | 6 | ☐ |
| Taxes(1/3) | - | 2 | ☐ |
| Net profit / loss | = | 4 | ☐ |

2004

Balance Sheet
(in millions) <u>2008</u> <u>2010</u>

| | | Year 2<br>Before<br>changes | Year 2<br>After<br>changes |
|---|---|---|---|
| **Assets** | | | |
| Cash & equivalents | + | 16 | ☐ |
| Accounts receivable | + | 10 | ☐ |
| Materials&components | + | 4 | ☐ |
| Work in progress | + | 20 | ☐ |
| Finished goods | + | 10 | ☐ |
| Total current assets | = | 60 | ☐ |
| Plant and equipment | + | 10 | ☐ |
| Property | + | 20 | ☐ |
| Total fixed assets | = | 30 | ☐ |
| Total assets | = | 90 | ☐ |
| **Liabilities & Equity** | | | |
| Loans | + | 40 | ☐ |
| Liabilities | = | 40 | ☐ |
| Beginning balance | + | 46 | 46 |
| Profit / loss this year | + | 4 | ☐ |
| Equity | = | 50 | ☐ |
| Total liabilities and equity | = | 90 | ☐ |

2006

At the end of the year

☐ Complete the Income Statement
Fill in the missing figures in the Income Statement

☐ Pay taxes
Pay the difference in taxes (Before changes and after changes) according to the Income Statement above.

☐ Complete the Balance Sheet
Use the figures from your model

☐ Complete the ROA model

2002

Evaluate the outcome

☐ The graph (right) shows cash flow before changes. How has that changed through your actions?

☐ What were the major improvements? How did the other teams do? Is there anything you would have done differently considering what you know now?

2000

Fig. 11A

ROA Model / Key indicators

Fig. 11B

Cash flow from sales
Before changes cash flow from sales was 15M
(see the graph).

How much is the cash flow now, after the changes?
Use the table below.

Sales: ___M
Costs
 Cost of goods sold: - ___M
 Overhead - ___M
 Development - ___M
CASH FLOW: = ___M

This shortcut is used by specialists:
Operating profit ___M
Plus Depreciation + ___M
CASH FLOW: = ___M

1208 — Parameter processing rules

Input / output interface

Parameter processing means

Parameter processing device
1202

1204          1206

Fig. 12A

1202

Parameter processing means / input / output interface

Means for receiving relative changes in first parameter values — 1230

1232

Means for calculating changed status of parameters and indicators

Means for storing a current status

1236

Means for out-putting current status — 1234

Means for storing a changed status — 1240

1208

Parameter processing rules

Means for out-putting a changed status — 1242

Fig. 12C

| Changes% | | Income Statement | | | | Balance sheet | | | | Cash flow |

Income Statement

| | Current | Improved |
|---|---|---|
| Sales | 100 | 97 |
| Cost of goods sold | 50 | 54 |
| Contribution | 50 | 43 |

1212  1216  1218

Balance sheet — 1214  1216  1218  1220

| Assets | Current | Improved |
|---|---|---|
| Cash & Equivalents | 10 | 10 |
| Accounts receivable | 10 | 11 |
| Inventory | 20 | 17 |
| Total current assets | 40 | 38 |
| Plant and equipment | 20 | 20 |
| Property | 40 | 40 |
| Total fixed assets | 60 | 60 |
| Total assets | 100 | 98 |

| Liabilities & Equity | Current | Improved |
|---|---|---|
| Liabilities | 20 | |
| Equity | 80 | |
| Total Liab. & Equity | 100 | |

| | Current | Improved |
|---|---|---|
| 1222 → ROCE | 6% | 2% |
| 1221 → Cash flow | 7 | 6 |

Changes%

1210

| | |
|---|---|
| Volume | +3% |
| Price | -6% |
| Cost of goods sold | +5% |
| Overhead | -10% |
| Accounts Reseivable | +12% |
| Inventory | -14% |

1204

Cash flow
Improved
Current
CL

Fig. 12B